# EUROPEAN PATENT APPLICATION

(11) **EP 0 682 985 A1**
(43) Date of publication of application: **22.11.1995**
(21) Application number: 95107508.4
(22) Date of filing: 17.05.1995
(51) Int. Cl.: B03D 1/14, C02F 1/24

(54) **Apparatus for the high-level clarification of liquids containing suspended solid particles**

(30) Priority: 20.05.1994 IT MI941037
(71) Applicant: Perletti, Fabio, I-20151 Milano (IT); O.M.C. OFFICINA MECCANICA COLLAREDA S.R.L., 36015 Schio (Vicenza) (IT)
(72) Inventor: Perletti, Fabio, I-20151 Milano (IT)
(74) Representative: Modiano, Guido, Dr.-Ing.

(57) **Abstract**

An apparatus for the high-level clarification of liquids containing suspended solid particles, which comprises a flotation tank (1) that forms a flotation cell (20) or region provided with an inlet (2) for the liquid to be clarified, which is supersaturated with gas, characterized in that it comprises, on at least one portion of the lateral surface that delimits the flotation cell, a filtration element (22) that separates the flotation cell (20) from a region (30) for collecting the liquid subjected to high-level clarification, which is achieved by flotation and subsequent filtration.

## Description

The present invention relates to an apparatus for the high-level clarification of liquids containing suspended solid particles, even at high concentrations.

It is known that various types of plant are currently used to perform the high-level clarification of liquids, and particularly of water, containing high concentrations of suspended particles; for example, a flotation plant and a plant that performs filtration by means of a microstrainer or with a sand filter.

An efficient flotation plant can clarify a liquid that contains 1000-5000 ppm (mg/l) of suspended solids to 50-100 ppm, whereas a filtration plant of the sand or microstrainer type can efficiently clarify a liquid that contains 50-100 ppm of suspended solids to 2-10 ppm.

In known solutions, when it is necessary to perform high-level clarification of liquids that contain high concentrations of solids, two separate plants are generally used in practice, namely a pre-clarification plant, which can be constituted by a flotation tank, by a sedimentation basin, or by another type of plant, which performs a first "coarse" elimination of the suspended solids, and a subsequent sand or microstrainer filter, which performs the higher-level or finishing clarification of the liquid.

The above-mentioned solutions require two separate plants, which in addition to a high investment cost, require considerable installation space.

Another drawback that can be ascribed to the solutions of the above-described prior art is constituted by the fact that in the sand or microstrainer filter it is necessary to use an amount of countercurrent flushing liquid that is normally 5-15% of the amount of the liquid to be filtered, and that it is then necessary to provide a specific plant for the clarification of the countercurrent flushing water, with a further increase in investment costs and in space occupation.

In order to try to obviate the above drawbacks, a solution has already been introduced and is described in patent GB 2105601 which provides, in practice, a single plant that performs the two separate clarification steps and more specifically an initial flotation step and a subsequent higher-level filtration step by means of a sand filter.

In the above embodiment, the flotation cell or chamber has, on its bottom, a sand filter that is formed by a plurality of radial sectors provided on the bottom.

This type of embodiment is highly complex from a structural point of view and furthermore produces considerable problems for the countercurrent flushing of the sand filter.

Countercurrent flushing is performed by means of a flushing hood that is coupled, in succession, at the various sectors of the filter to produce a flow of liquid in countercurrent by aspiration, thus removing the particles that have deposited in the sand filter.

The dirty discharge water is either fed back into the amount of water to be clarified, upstream of the flotation area, or is clarified in a separate plant.

The means used to perform the countercurrent flushing of the sand filter are considerably complicated, since it is necessary to provide appropriate devices for actuating the aspiration means that act on the flushing hood.

Accordingly, this clarification plant has particularly significant constructive complications and therefore has costs that significantly limit the advantages that arise from providing in a single plant two separate filtration steps, that is to say, a first flotation step and a subsequent filtration step.

The aim of the invention is indeed to eliminate the drawbacks described above, providing an apparatus for the high-level clarification of liquids, including liquids containing a high load of suspended solid particles, that allows to perform, in a single unit, all the steps required for high-level clarification, that is to say, the coarse pre-clarification and the subsequent finishing filtration, but without thereby introducing particular structural problems in the plant.

Within the scope of the above aim, a particular object of the invention is to significantly reduce the investment costs and the space required by the plant, with the additional advantage of also performing, in the same plant, the clarification of the water used for the countercurrent flushing of the filter.

Another object of the present invention is to provide an apparatus that, by virtue of its particular constructive characteristics, is capable of giving the greatest assurances of reliability and safety in use and is also competitive from an economic point of view.

This aim, these objects, and others which will become apparent hereinafter are achieved by an apparatus for the high-level clarification of liquids containing suspended solid particles, according to the invention, which comprises a flotation tank that forms a flotation cell or region that has an inlet for the liquid to be clarified, which is supersaturated with gas, generally air; characterized in that it comprises, on at least one portion of the lateral surface that delimits said flotation cell, a filtration element that separates said flotation cell from a region for collecting the liquid subjected to high-level clarification, which is achieved by flotation and subsequent filtration.

Further characteristics and advantages will become apparent from the description of a preferred but not exclusive embodiment, illustrated only by way of non-limitative example in the accompanying drawings, wherein:

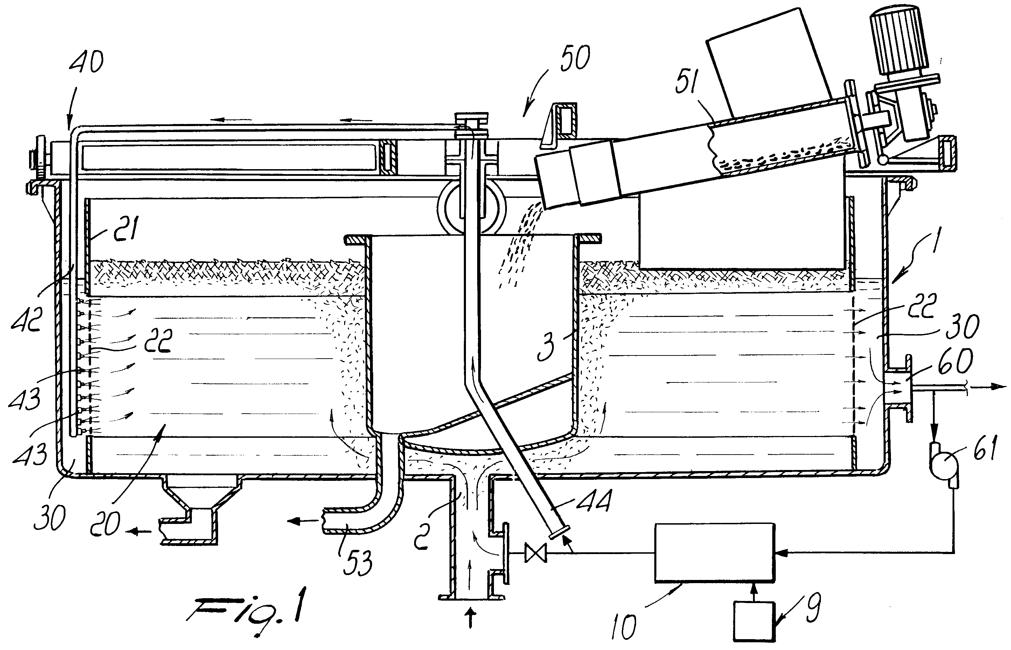

figure 1 is a schematic sectional view, taken along a vertical plane, of an apparatus for the high-level clarification of liquids, according to the invention;

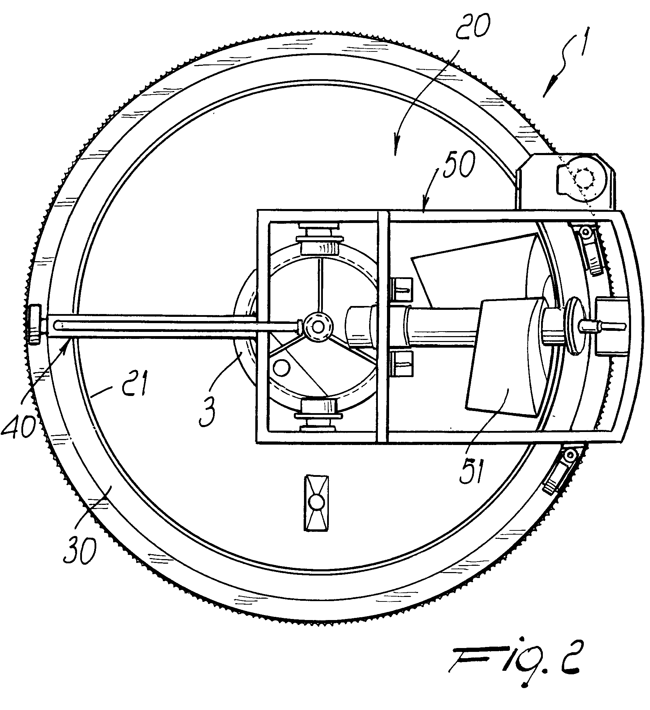

figure 2 is a top plan view of the apparatus.

With reference to the above figures, the apparatus for the high-level clarification of liquids containing suspended solid particles, according to the invention, comprises a flotation tank, generally designated by the reference numeral 1, which is for example of the type described in patent EP 442463, which is incorporated herein by reference.

Preferably, the flotation tank 1 has a substantially cylindrical shape and forms, at its bottom, an inlet 2 for introducing the liquid to be clarified, which leads to the bottom of the tank 1 in an axial position.

Above the inlet 2, in the tank 1, there is an internally hollow axial deflection body 3 with a closed bottom that in practice acts as flow divider; said flow rises axially, flowing around the deflection body 3.

An important particularity of the invention is constituted by the fact that a flotation cell 20 is delimited inside the tank 1 by means of an inside wall 21 that forms, together with the tank 1, an annular region 30 that is preferably concentric with respect to the cell 1.

An important characteristic of the invention is constituted by the fact that at least surface portions of the inside wall 21 are constituted by a filtration element 22 that is formed by means of a micromesh net that perimetrically delimits the flotation cell, so as to force the water, which is pre-clarified by flotation, to pass through the perimetric filtration net and collect in an annular compartment that lies outside the flotation cell, from which it is drawn and sent to the user.

The filtration element has a mesh size that is adapted for the application and to the nature of the solids to be filtered; nets with a mesh size of 15 to 100 µm are normally used.

The net can be made of metallic material, stainless steel, or of synthetic textile material, according to the operating conditions, that is to say, to the type of effluent to be treated, to the temperature, to the degree of corrosiveness, and so forth.

The filtration element 22 is advantageously arranged in an annular fashion, and its height is such as to affect the median region of the water head that forms in the flotation cell, so as to substantially not affect the surface portion, where the material removed by flotation collects, and the bottom region, where the heavier sludge may deposit.

The apparatus also comprises a countercurrent flushing apparatus, generally designated by the reference numeral 40, which is advantageously constituted by a vertical tube 42 provided with a series of spraying nozzles 43; said tube rotates in the perimetric annular region where the water subjected to high-level clarification collects.

Advantageously, the tube 42 is supported by the structure of the rotating bridge 50 of the flotation unit, which also supports the spillway unit 51, constituted for example by rotating vanes that remove the material that has floated to the surface and convey it into the diverter, which has a discharge 53 for the sludge subjected to flotation.

The countercurrent flushing water that is introduced in the vertical tube 42 can be advantageously taken, by means of a branching connector 44, directly from the air dissolving circuit that serves the flotation unit, which is constituted by a pressurization pump 61, by a pressurized tank 10 in which compressed air 9 is fed, and by the depressurization valve 11; accordingly, during the countercurrent flushing of the filtration element the countercurrent flushing water undergoes a sudden pressure drop, releasing the air dissolved in it as microbubbles, which adhere to the flushed particles, facilitating their flotation in the flotation cell.

As an alternative, the countercurrent flushing water can be taken directly from the annular region 30 and saturated with air in a separate saturation unit.

In other words, the water for the countercurrent flushing of the filtration element does not have to be subjected to a separate clarification step, as it is known in the art, but is returned directly to the flotation cell, and since the countercurrent flushing water is supersaturated with air, clarification by flotation is performed directly.

The vertical tube, as mentioned, is supported by the structure of the rotating bridge of the spillway unit and rotates rigidly with it.

The rotation rate of the spillway unit is approximately 4-6 minutes per rotation, and therefore 4-6 minutes is also the interval for the countercurrent flushing of the filtration net.

This interval can be reduced, if necessary, by providing two or more mutually equidistant spraying tubes, directly returning the particles washed away from the filtration element in the flotation cell.

It should also be added to the above that the geometric configuration of the plant is ideally suited for mutually adapting the specific hydraulic loads that are typical of the two processes used, that is to say, flotation and filtration.

The typical values of the specific hydraulic load for flotation, expressed as cubic meters of liquid to be treated per square meter of flotation surface per hour, are normally 5-8 cu m/sq m x h, and the typical values of the hydraulic filtration load, expressed in cubic meters per square meters of filtration surface per hour, are between 10 and 20 cu m/sq m x h.

In practice, for example, a circulation flotation unit with a flotation cell having a diameter of 6 meters, which accordingly has a net flotation surface of approximately 27 sq m, can treat, with a load of 8 cu m/sq m x h, a flow-rate of 216 cu m/h. This same flow-rate is filtered through a circular wall of filtration net that is 0.77 m high with a specific filtration load of 15 cu m/sq m x h.

From the above description it is thus evident that the invention achieves the intended aim and objects, and in particular the fact is stressed that a high-level clarification apparatus is provided that combines two methods that are per se individually known but are used on two units that are arranged separately and in succession.

The inclusion of the flotation cell and of the filtration element in a single apparatus allows first of all to drastically reduce costs and space occupation, and secondly to perform countercurrent flushing of the filtration element by directly returning the particles removed by countercurrent flushing into the flotation cell, in which the particles are subjected to flotation, by virtue of the fact that the countercurrent flushing water is supersaturated with air in the form of microbubbles.

The invention thus conceived is susceptible of numerous modifications and variations, all of which are within the scope of the inventive concept.

All the details may furthermore be replaced with other technically equivalent elements.

In practice, the materials employed, so long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Apparatus for the high-level clarification of liquids containing suspended solid particles, which comprises a flotation tank (1) that forms a flotation cell (20) or region that has an inlet (2) for the liquid to be clarified, which is supersaturated with gas, characterized in that it comprises, on at least one portion of the lateral surface that delimits said flotation cell (20), a filtration element (22) that separates said flotation cell (20) from a region (30) for collecting the liquid subjected to high-level clarification, which is achieved by flotation and subsequent filtration.

2. Apparatus according to claim 1, characterized in that said flotation cell (20) is delimited by internal walls (21) that are coaxial to said flotation tank and delimit, together with said flotation tank (1), said region (30) for collecting the liquid subjected to high-level clarification.

3. Apparatus according to the preceding claims, characterized in that said filtration element (22) affects a middle portion of the vertical extension of said inside walls.

4. Apparatus according to one or more of the preceding claims, characterized in that it comprises a unit (40) for the countercurrent flushing of said filtration element (22), constituted by at least one vertical tube (42) that is provided with a series of spray nozzles (43) that are adapted to feed by countercurrent flushing on said filtration element (22) jets of a liquid that is supersaturated with air for the flotation, in said flotation cell (20), of the particles washed away from said filtration element (22).

5. Apparatus according to one or more of the preceding claims, characterized in that said at least one vertical tube (42) is supported by the supporting frame (50) of a spillway unit (51) that acts in said flotation cell (20).

6. Apparatus according to one or more of the preceding claims, characterized in that said countercurrent flushing unit (40) is supplied with liquid clarified by the apparatus itself.
